# DEMANDE DE BREVET EUROPEEN

(11) **EP 4 057 041 A1**
(43) Date de publication de la demande: **14.09.2022**
(21) Numéro de dépôt: 22160803.7
(22) Date de dépôt: 08.03.2022
(51) Int. Cl.: G02B 6/44, G02B 6/52

(54) **CÂBLE OPTIQUE POUR INSTALLATION DANS UN FOURREAU PAR PORTAGE PAR UN FLUIDE**

(30) Priorité: 10.03.2021 FR 2102325
(71) Demandeur: Nexans, 92400 Courbevoie (FR)
(72) Inventeur: ALESSI, Luigi, 59600 MAUBEUGE (FR); HOUYAUX, Alain, 59600 ELESME (FR)
(74) Mandataire: Ipsilon

(57) **Abrégé**

L'invention concerne un câble optique (28) configuré pour être inséré à l'intérieur d'un fourreau sous l'action d'un fluide porteur, ledit au moins câble optique (28) comprenant :
- un porteur central de renforcement mécanique (32),
- au moins un module de fibres optiques (34) disposé autour du porteur central de renforcement mécanique (32), ledit au moins un module de fibres optiques (34) comprenant un micro-tube (36) et une pluralité de fibres optiques s'étendant à l'intérieur du micro-tube (36),
- au moins un élément de maintien (38) guipé autour dudit au moins un module de fibres optiques (34) pour maintenir ledit au moins un module de fibres optiques (34) contre le porteur central de renforcement mécanique (32), et
- une gaine de protection (40) disposée autour dudit au moins un élément de maintien (38).

## Description

La présente invention concerne les câbles optiques dont la mise en place à l'intérieur d'un fourreau est réalisée par un fluide porteur, par exemple un gaz ou un liquide. Cette technique de mise en place est connue sous le terme « portage ».

En particulier, la présente invention concerne un câble optique comprenant au moins un micro-tube recevant une pluralité de fibres optiques.

Ces câbles optiques sont insérés à l'intérieur d'un fourreau à l'aide d'un fluide porteur, notamment de l'air ou de l'eau. Un effort de poussée est appliqué au câble optique pour le faire se déplacer le long du fourreau sur de grandes distances, par exemples plusieurs centaines de mètres.

Cette technique de mise en place est généralement utilisée pour installer des câbles à l'intérieur de fourreaux souterrains. Cette technique de portage par un fluide porteur permet de faciliter l'opération de mise en place et d'en réduire le temps d'exécution.

Les câbles optiques adaptés à une mise en place par portage comprennent une pluralité de modules de fibres optiques disposés autour d'un porteur central. Chaque module de fibres optiques comprend un tube et une pluralité de fibres optiques s'étendant à l'intérieur de ce tube. Une gaine de protection entoure l'ensemble formé par le porteur central et les modules de fibres optiques. Des éléments de renforcement, entre autres des mèches d'aramide ou de verre, peuvent être placés entre la gaine de protection et l'ensemble formé par le porteur et les modules de fibres optiques.

Ces câbles optiques adaptés à une installation par portage ne doivent pas être confondus avec d'autres types de câbles optiques, notamment les câbles optiques aériens. La nature de leur mise en place par portage implique une structure du câble optique différente ainsi que des dimensions adaptées aux fourreaux. A titre d'exemple, les câbles optiques adaptés à une mise en place par un fluide porteur ont un diamètre inférieur aux câbles optiques aériens .

Une difficulté majeure de ce type de technique d'installation par portage réside dans le fait que le câble doit présenter un compromis optimal entre rigidité et flexibilité pour permettre un déplacement efficace du câble à l'intérieur du fourreau tout en étant capable de franchir des courbes tout au long du tracé du parcours de l'installation.

La rigidité du câble permet une bonne transformation de l'énergie fournie par l'effort de poussée sur le câble lors de son installation dans le fourreau.

Par contre, un câble optique ayant une trop grande rigidité peut avoir des difficultés à franchir des courbes formés par le fourreau. En effet, étant donné que l'énergie dissipée à vaincre la rigidité du câble dans les courbes devient plus importante que l'énergie injectée par la poussée sur le câble, ce dernier peut s'avérer difficile à faire progresser dans le fourreau. Il est ainsi nécessaire d'avoir un câble optique suffisamment flexible pour franchir ces courbes.

A contrario, un câble trop flexible aura également tendance à vriller et former des courbes (sinusoïdales ou en forme de vrilles) à l'intérieur du fourreau entrainant ainsi une augmentation des frottements entre le câble et le fourreau, ce qui limite la progression du câble optique.

Les solutions connues pour obtenir un bon équilibre entre rigidité et flexibilité du câble optique dépendent de la composition du câble optique, notamment des tubes entourant les fibres optiques. Ces tubes peuvent être des tubes rigides et durs (appelés généralement « loose tubes » en anglais) ou des tubes souples et mous (appelés généralement « micro-bundle » en anglais).

Les tubes rigides ou « loose tubes » ont généralement une épaisseur supérieure à 0,2mm et ont pour objectif de former une barrière rigide de protection des fibres optiques. Ces tubes rigides ne peuvent par exemple pas être déchirés à mains nues par un opérateur. Un outil est ainsi nécessaire pour dénuder un tel tube. La rigidité conférée par les tubes rigides permet au câble optique d'avoir une rigidité globale suffisante pour un déplacement efficace dans un fourreau dont le tracé est principalement en ligne droite.

Les tubes souples ou « micro-bundles » forment une peau très fine autour des fibres optiques, généralement l'épaisseur est inférieure ou égale à 0,2mm. Ainsi, les tubes souples peuvent être déchirés manuellement de sorte qu'ils facilitent grandement la manipulation du câble optique lors d'une opération de connexion. Toutefois, la souplesse de ces tubes ne permet pas au câble optique d'avoir une rigidité suffisante pour supporter un effort de poussée importante.. Le câble optique a donc tendance à vriller et à frotter contre la paroi interne du fourreau, rendant ainsi difficile la progression du câble optique.

Pour pallier cette augmentation du frottement entre le câble et le fourreau, il est connu d'appliquer un lubrifiant entre le câble optique et fourreau pour favoriser la progression du câble optique à l'intérieur du fourreau. Cette solution est toutefois onéreuse compte-tenu du temps nécessaire à l'application du lubrifiant. Elle ajoute de ce fait, une contrainte à l'opérateur lors de la mise en place du câble optique.

Il existe donc un besoin pour un câble optique permettant une mise en place facilitée, ce câble optique étant du type à mettre en place par portage à l'intérieur d'un fourreau et comprenant des tubes souples ou « micro-bundles » recevant des fibres optiques.

Pour cela, l'invention propose un câble optique configuré pour être inséré à l'intérieur d'un fourreau sous l'action d'un fluide porteur, ledit au moins câble optique comprenant :
- un porteur central de renforcement mécanique,
- au moins un module de fibres optiques disposé autour du porteur central de renforcement mécanique, ledit au moins un module de fibres optiques comprenant un micro-tube et une pluralité de fibres optiques s'étendant à l'intérieur du micro-tube,
- au moins deux éléments de maintien guipés autour dudit au moins un module de fibres optiques pour maintenir ledit au moins un module de fibres optiques contre le porteur central de renforcement mécanique, et
- une gaine de protection disposée autour dudit au moins un élément de maintien.

Le maintien dudit au moins un module de fibres optiques contre le porteur central de renforcement mécanique au moyen d'au moins deux éléments de maintien permet de rigidifier suffisamment le câble optique, permettant de diminuer le phénomène de vrilles du câble optique à l'intérieur du fourreau. Ainsi, les contacts et donc les frottements entre le câble optique et le fourreau sont réduits ce qui facilite le déplacement du câble optique le long du fourreau.

Selon des modes particuliers de réalisation :
- la gaine de protection est réalisé dans un matériau ayant un coefficient de frottement à sec inférieur ou égal à 0,3 ;
- le matériau de la gaine de protection peut comprendre du polyamide ;
- la gaine de protection présente une épaisseur inférieure ou égale à 0,3mm ;
- le câble optique présente un diamètre externe inférieur ou égal à 11 mm ;
- le micro-tube dudit au moins un module de fibres optiques présente une épaisseur inférieure ou égale à 0,2mm ;
- le micro-tube dudit au moins un module de fibres optiques présente un allongement à la rupture inférieur ou égal à 300%, de préférence inférieur à 200%, de manière encore préférée entre 80% et 200% ;
- le micro-tube dudit au moins un module de fibres optiques présente une charge à la rupture inférieure ou égale à 20MPa, de préférence inférieure ou égale à 15MPa ;
- le micro-tube dudit au moins un module de fibres optiques est réalisé dans un matériau comprenant des halogènes ou un matériau à faible taux d'halogène, et/ou dans un matériau à faible émission de fumées, et/ou un matériau non-propagateur de flamme ;
- ledit au moins un câble optique comprend une pluralité de modules de fibres optiques enroulés autour du porteur central de renforcement mécanique selon un pas d'enroulement prédéterminé, lesdits au moins deux éléments de maintien étant guipés autour de la pluralité de modules de fibres optiques pour maintenir ladite pluralité de modules de fibres optiques contre le porteur central de renforcement mécanique ;
- lesdits au moins deux éléments de maintien sont guipés autour dudit au moins un module de fibres optiques avec un effort de guipage inférieur ou égal à 3 N ;
- lesdits au moins deux éléments de maintien comprennent un premier et un deuxième élément de maintien guipés autour dudit au moins un module de fibres optiques en sens opposés ;
- lesdits au moins deux éléments de maintien sont réalisés en aramide, polyester, verre, ou tout autre matériau adapté au guipage..

L'invention concerne également une installation de câble optique comprenant un fourreau et un câble optique tel que décrit ci-avant inséré à l'intérieur dudit fourreau.

Selon un mode de réalisation de l'installation de câble optique, le fourreau présente un diamètre interne inférieur ou égal à 14 mm .

L'invention en outre un procédé d'insertion d'un câble optique à l'intérieur d'un fourreau à l'aide d'un fluide porteur, comprenant les étapes suivantes :
- fournir une installation de câble optique telle que décrite ci-avant,
- disposer une extrémité dudit câble optique en regard d'une extrémité du fourreau,
- générer un flux de fluide porteur autour du câble optique pour supporter au moins partiellement le câble optique à l'intérieur dudit fourreau,
- appliquer un effort de poussée au câble optique pour déplacer le câble optique à l'intérieur et le long dudit fourreau.

Selon un mode de réalisation du procédé d'insertion, le fluide porteur est un gaz et/ou de l'eau.

### Brève description des dessins

Les dessins annexés illustrent l'invention :
[Fig. 1] représente une vue en perspective d'un câble optique partiellement dénudé de manière à observer les composants de ce câble optique.
[Fig. 2] représente une vue en perspective d'un câble tel qu'illustré en figure 1 à l'intérieur d'un fourreau représenté en transparence.

### Description de mode(s) de réalisation

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

Il est proposé un câble optique configuré pour être inséré à l'intérieur d'un fourreau sous l'action d'un fluide porteur. Un effort de poussée est appliqué au câble optique pour le déplacer à l'intérieur et le long du fourreau. Le fluide porteur a pour fonction de supporter et d'entrainer le câble optique pour aider au déplacement de celui-ci dans le fourreau. Le support du câble optique par le fluide porteur permet de réduire les contacts entre le câble optique et la paroi interne du fourreau, limitant ainsi les frottements.

Le fluide porteur peut être un liquide et/ou gaz. De manière préférée, le fluide porteur est de l'air ou de l'eau.

Le fourreau est un corps élancé et creux formant une cavité interne apte à recevoir un câble optique. Le fourreau peut s'étendre sur plusieurs centaines de mètres. De manière préférée, le fourreau est une conduite creuse, par exemple de section circulaire. Le fourreau présente de préférence un diamètre interne inférieur ou égal à 14mm.

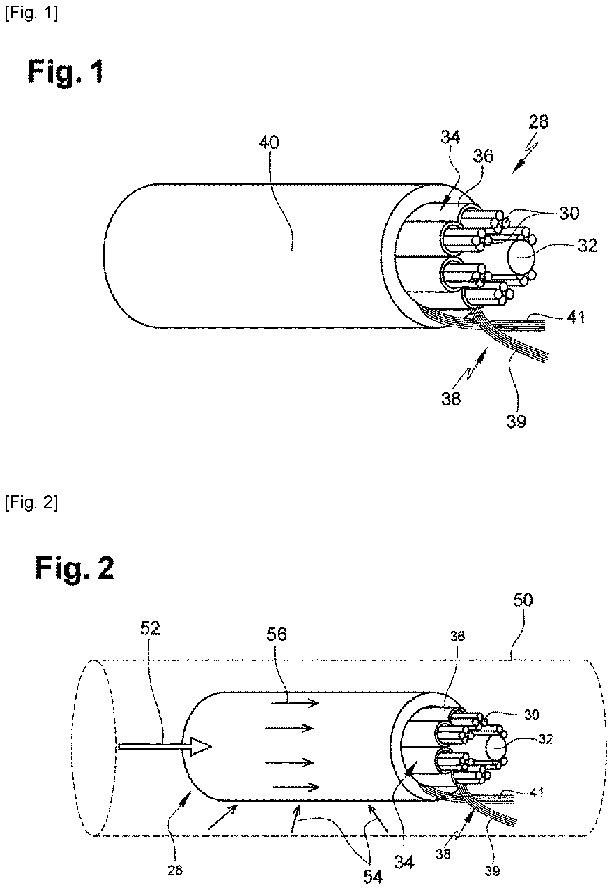

La figure 1 représente un exemple de câble optique 28 conforme à l'invention. Sur cette figure, le câble optique 28 a été dénudé sur une partie de sa longueur pour visualiser les composants du câble optique 28.

Le câble optique 28 comprend un porteur central de renforcement mécanique 32 et une pluralité de module de fibres optiques 34 disposés autour du porteur central de renforcement mécanique 32. Le porteur central de renforcement mécanique 32 sera appelé ci-dessous « porteur central 32 » à fins de clarté de l'exposer.

Le porteur central 32 a pour fonction de supporter une partie des efforts mécaniques auxquels le câble optique 28 est soumis, notamment les efforts de flexion et les efforts longitudinaux. Le porteur central 32 peut être réalisé en plastique renforcé de fibres (appelé « FRP » ou « Fibre Reinforced Plastic » en anglais), en plastique à renfort de verre (appelé « GRP » ou « Glass Reinforced Plastic » en anglais) ou en plastique à renfort d'aramide (appelé « ARP » ou « Aramid Reinforced Plastic » en anglais). Le porteur central 32 peut être de toute forme. De manière avantageuse, le porteur central 32 est de section circulaire de manière à avoir un agencement équilibré des modules de fibres optiques 34 autour de lui et une résistance aux efforts uniforme..

Chaque module de fibres optiques 34 comprend un micro-tube 36 et une pluralité de fibres optiques 30 s'étendant à l'intérieur du micro-tube 36. Le micro-tube 36 est de préférence réalisé sous forme de tube souple ou « micro-bundle ».

Pour obtenir cette souplesse, le micro-tube présente un allongement à la rupture inférieur ou égal à 300%, de préférence inférieur à 200%, de manière encore préférée entre 80% et 200%. De plus, le micro-tube 36 présente de préférence une charge à la rupture inférieure ou égale à 20MPa, de préférence inférieure ou égale à 15MPa. Un tel micro-tube 36 peut ainsi être déchiré manuellement. Le micro-tube 36 présente de préférence une épaisseur inférieure ou égale à 0,2mm. Le micro-tube 36 est réalisé dans un matériau comprenant des halogènes ou un matériau à faible taux d'halogène (communément appelé zéro halogène). Le matériau du micro-tube 36 peut également être à faible émission de fumées et /ou non-propagateur de flamme.

Le micro-tube 36 sous forme de « micro-bundle » est à opposer aux tubes rigides (appelés « loose tubes » en anglais) et qui forment une coque rigide autour des fibres optiques.

Les modules de fibres optiques 34 sont de préférence enroulés autour du porteur central 32 selon un pas d'enroulement prédéterminé. Des éléments de maintien 38 sont guipés autour des modules de fibres optiques 34 pour les maintenir contre le porteur central 32. De manière générale, au moins deux éléments de maintien 38 peuvent être utilisés.

On entend par « guipage » le fait d'entrelacer ou d'enrouler en hélice des élément autour d'une âme, ici la pluralité de module de fibres optiques 34, afin de la contraindre contre le porteur central 32. Cette contrainte peut être maitrisée en fonction de l'effort de guipage appliqué par les éléments de maintien 38.

Les éléments de maintien 38 sont guipés autour des modules de fibres optiques 34 avec un effort de guipage prédéterminé. Cet effort de guipage est de préférence inférieur ou égal à 3 N. Il en effet important de ne pas guiper les éléments de maintien autour des micro-tubes 36 avec un effort trop important pour éviter tout risque de détérioration des fibres optiques.

Les éléments de maintiens 38 peuvent être un fil, un ruban ou tout autre élément permettant le guipage.

Les éléments de maintien 38 peuvent être réalisé en aramide, polyester, verre, ou tout autre matériau adapté au guipage. Les éléments de maintien 38 sont de préférence en aramide pour éviter le phénomène de retrait, notamment observé avec le polyester, due aux variations de température dans le temps. Ce phénomène de retrait peut entrainer un resserrement du guipage contraignant les modules de fibres optiques 34 ce qui peut engendrer à terme une augmentation de l'atténuation des fibres optiques 30. L'atténuation d'une fibre optique correspond à une perte de signal ou de puissance de lumière à l'intérieur de la fibre optique 30.

L'utilisation d'au moins deux éléments de maintien 38 est privilégiée de manière à pouvoir croiser les éléments de maintien 38. Selon une configuration préférée, un premier élément de maintien 39 est guipé dans un sens d'enroulement et un deuxième élément de maintien 41 est guipé en sens opposé. Ainsi, les premier 39 et deuxième 41 éléments de maintien se croisent. Cet enroulement croisé confère un plus grand équilibre à la structure formée par les modules de fibres optiques 34 et le porteur central 32, en particulier par rapport à une configuration comprenant un seul élément de maintien. En effet, un guipage dans un seul sens aura tendance entrainer la structure du câble optique 28 à vriller dans le sens de rotation du guipage.

De manière encore préféré, un élément de maintien 38 est guipé dans un sens d'enroulement et un élément de maintien 38 est guipé dans un sens opposé à ce sens d'enroulement.

Le câble optique 28 comprend également une gaine de protection 40 formant une couche autour des micro-tubes 36 et des éléments de maintien 38. La gaine de protection 40 présente de manière préférée une épaisseur inférieure ou égale à 0,3mm de manière à rendre le câble optique 28 très compact. Ceci est particulièrement avantageux pour un câble optique 28 configuré pour l'insertion via fluide porteur. La gaine de protection 40 est de préférence au contact des modules de fibres optiques 34. De manière alternative, des éléments de renforcement peuvent être insérés entre la gaine de protection 40 et les modules de fibres optiques 34.

Le câble optique 28 présente de préférence un diamètre externe inférieur ou égal à 11 mm. Cette dimension externe permet au câble optique 28 d'être inséré dans un fourreau ayant un diamètre interne inférieur ou égal à 14mm.

La gaine de protection 40 est de préférence réalisée dans un matériau ayant un coefficient de frottement à sec inférieur ou égal à 0,3. Ceci permet de réduire les frottements entre le câble optique 28 et le fourreau. Un matériau préféré pour la gaine de protection 40 est le polyamide. L'association d'un câble optique 28 rigidifié par le maintien des modules de fibres optiques 34 par des éléments de maintien 38 et comportant une gaine de protection 40 avec un tel coefficient de frottement permet de s'affranchir de l'utilisation d'un lubrifiant pour l'insertion du câble optique 28. Une telle association permet donc de faciliter l'insertion du câble optique 28 pour l'opérateur et de réduire le temps d'opération.

En référence à la figure 2, il est également proposé un procédé d'insertion d'un câble optique 28 à l'intérieur d'un fourreau 50 à l'aide d'un fluide porteur.

Une extrémité dudit câble optique 28 est disposée en regard d'une extrémité du fourreau 50. Le câble optique 28 est engagé à l'intérieur du fourreau 50.

Un effort de poussée 52 est ensuite appliqué au câble optique 28 de manière à le faire avancer à l'intérieur et le long du fourreau 50. L'effort de poussée 52 peut être appliqué mécaniquement à l'aide d'un dispositif d'entrainement disposés hors du fourreau 50.

Un flux de fluide porteur est généré autour du câble optique 28 de manière à le supporter au moins partiellement et à l'entrainer le long du fourreau 50. La génération du flux de fluide porteur peut être réalisée avant ou conjointement à l'application de l'effort de poussée 52.

Le fluide porteur exerce conjointement sur le câble optique 28 un effort de support 54 opposé à la gravité et un effort de poussée additionnel 56 dû aux frottements du fluide porteur sur la paroi externe du câble optique 28. Sur la figure 2, le fluide porteur est injecté dans le fourreau 50 depuis la gauche vers la droite.

## Revendications

1. Câble optique (28) configuré pour être inséré à l'intérieur d'un fourreau sous l'action d'un fluide porteur, ledit au moins câble optique (28) comprenant :
- un porteur central de renforcement mécanique (32),
- au moins un module de fibres optiques (34) disposé autour du porteur central de renforcement mécanique (32), ledit au moins un module de fibres optiques (34) comprenant un micro-tube (36) et une pluralité de fibres optiques s'étendant à l'intérieur du micro-tube (36),
- au moins deux éléments de maintien (38) guipés autour dudit au moins un module de fibres optiques (34) pour maintenir ledit au moins un module de fibres optiques (34) contre le porteur central de renforcement mécanique (32), et
- une gaine de protection (40) disposée autour dudit au moins un élément de maintien (38).

2. Câble optique (28) selon la revendication 1, dans lequel la gaine de protection (40) est réalisé dans un matériau ayant un coefficient de frottement à sec inférieur ou égal à 0,3.

3. Câble optique (28) selon la revendication 2, dans lequel le matériau de la gaine de protection comprend du polyamide.

4. Câble optique (28) selon l'une des revendications 1 à 3, dans lequel le micro-tube (36) dudit au moins un module de fibres optiques (34) présente une épaisseur inférieure ou égale à 0,2mm.

5. Câble optique selon l'une quelconque des revendications précédentes, dans lequel le micro-tube (36) dudit au moins un module de fibres optiques (34) présente un allongement à la rupture inférieur ou égal à 300%, de préférence inférieur à 200%, de manière encore préférée entre 80% et 200%.

6. Câble optique (28) selon la revendication 5, dans lequel le micro-tube (36) dudit au moins un module de fibres optiques (34) présente une charge à la rupture inférieure ou égale à 20MPa, de préférence inférieure ou égale à 15MPa.

7. Câble optique (28) selon l'une quelconque des revendications précédentes, dans lequel le micro-tube (36) dudit au moins un module de fibres optiques (34) est réalisé dans un matériau comprenant des halogènes ou un matériau à faible taux d'halogène, et/ou dans un matériau à faible émission de fumées, et/ou un matériau non-propagateur de flamme.

8. Câble optique (28) selon l'une quelconque des revendications précédentes, dans lequel ledit au moins un câble optique (28) comprend une pluralité de modules de fibres optiques (34) enroulés autour du porteur central de renforcement mécanique (32) selon un pas d'enroulement prédéterminé, lesdits au moins deux éléments de maintien (38) étant guipés autour de la pluralité de modules de fibres optiques (34) pour maintenir ladite pluralité de modules de fibres optiques (34) contre le porteur central de renforcement mécanique (32).

9. Câble optique (28) selon l'une quelconque des revendications précédentes, dans lequel lesdits au moins deux éléments de maintien (38) sont guipés autour dudit au moins un module de fibres optiques (34) avec un effort de guipage inférieur ou égal à 3 N.

10. Câble optique (28) selon l'une quelconque des revendications précédentes, dans lequel lesdits au moins deux éléments de maintien (38) comprennent un premier et un deuxième éléments de maintien guipés autour dudit au moins un module de fibres optiques en sens opposés.

11. Câble optique (28) selon l'une quelconque des revendications précédentes, dans lequel lesdits au moins deux éléments de maintien (38) sont réalisés en aramide, polyester, ou verre.

12. Installation de câble optique comprenant un fourreau et un câble optique (28) selon l'une quelconque des revendications précédentes inséré à l'intérieur dudit fourreau.

13. Procédé d'insertion d'un câble optique (28) à l'intérieur d'un fourreau à l'aide d'un fluide porteur, comprenant les étapes suivantes :
- fournir une installation de câble optique selon la revendication 11,
- disposer une extrémité dudit câble optique (28) en regard d'une extrémité du fourreau,
- générer un flux de fluide porteur autour du câble optique (28) pour supporter au moins partiellement le câble optique (28) à l'intérieur dudit fourreau,
- appliquer un effort de poussée au câble optique pour déplacer le câble optique (28) à l'intérieur et le long dudit fourreau.

14. Procédé d'insertion selon la revendication 13, dans lequel le fluide porteur est un gaz et/ou de l'eau.
